# EUROPEAN PATENT SPECIFICATION

(11) **EP 4 438 479 B1**
(45) Date of publication and mention of the grant of the patent: **11.03.2026**
(21) Application number: 23166048.1
(22) Date of filing: 31.03.2023
(51) Int. Cl.: B64D 11/04

(54) **AIRCRAFT OVEN WITH SAFETY OPERATION MODE**
FLUGZEUGOFEN MIT SICHERHEITSBETRIEBSMODUS
FOUR D'AÉRONEF AVEC MODE DE FONCTIONNEMENT DE SÉCURITÉ

(43) Date of publication of application: 02.10.2024
(73) Proprietor: B/E Aerospace, Inc., Winston-Salem, NC 27105 (US)
(72) Inventor: PEREZ CAMACHO, Manuel, Nieuwegein (NL)
(74) Representative: Dehns

(56) References cited:
- EP-A1- 3 663 201
- EP-A1- 4 112 463
- EP-A1- 4 112 465
- WO-A1-2011/056763
- US-A1- 2014 209 332
- US-A1- 2017 361 139
- US-A1- 2021 379 432

## Description

### TECHNICAL FIELD

The present disclosure relates to an aircraft oven with a safety operation mode for use on an aircraft.

### BACKGROUND

Passengers travelling in aircraft often carry, and use, portable electronics in flight. Additionally, aircraft include potentially hazardous items that could cause a fire within the aircraft cabin. In rare instances, batteries in the portable electronics or hazardous items may overheat and cause a fire. Fumes, smoke and/or fire accidents are the most severe incidents that can happen inside an aircraft and can lead to catastrophic loss of the aircraft in a very short period of time. Due to increasing demand of portable electronics, and other dangerous goods, the risks have also increased rapidly.

Portable electronic devices, for example, are allowed in the aircraft cabin and most of their batteries are highly flammable and extremely sensitive to impacts, damage and high temperatures. Thus, these goods pose a risk of uncontained thermal runaway leading to explosion, fire, and/or the release of fumes or smoke. Fumes, smoke and/or fire can usually be detected early by the cabin crew and the cabin crew can usually address these hazards with firefighting equipment. However, firefighting equipment does not necessarily address the problem of smoke and fumes. For example, fire blankets and portable fire extinguishers can be used to suffocate fire, but they cannot contain fumes or smoke, which can lead to reduced visibility, toxic fume inhalation, panic amongst passengers, etc.

Although safety boxes are available in the field for such hazardous items, they require a refit of an aircraft to provide safety boxes around the cabin. They are cumbersome to install and require space and weight allowances in an aircraft. Therefore, there is a need for an improved and more available way of containing fumes, smoke and/or fire on aircraft. EP 4 112 463 A1 relates to an oven with an air quality sensor,

### SUMMARY

In one aspect, an aircraft oven is provided as defined by claim 1. The aircraft oven includes an inner cavity configured to receive at least one hazardous item and an oven door. When the oven door is closed, the aircraft oven is configured to switch from a normal operation mode to a safety operation mode, in use.

The aircraft oven may further include a vent hose and a valve. Optionally, when the aircraft oven is in the safety operation mode, the control valve is closed. Preferably, the valve is permanently closed.

The aircraft oven may further include a Human Machine Interface and/or a mechanical actuator. The Human Machine Interface and/or the mechanical actuator may be configured to switch the aircraft oven from the normal operation mode to the safety operation mode, in use.

The aircraft oven may further include insulation and an airtight seal. The airtight seal may be located between the oven door and the insulation. Preferably, the oven door may include an inner door surface and the inner cavity may include an inner cavity surface. The airtight seal may be located between the inner door surface and the inner cavity surface. The inner door surface and the inner cavity surface may include a refractory or metallic material.

In another aspect, there is provided an aircraft that includes the aircraft oven described above.

In another aspect, a method for switching an aircraft oven from a normal operation mode to a safety operation mode is provided as defined by claim 9. The method includes opening an oven door, depositing at least one hazardous item within an inner cavity of the aircraft oven, closing the oven door and locking the oven door, activating a user interface to switch from a normal operation mode to a safety operation mode.

The method may further include removing at least one meal carrier from the aircraft oven between the steps of opening the door and depositing the at least one hazardous material within the inner cavity of the aircraft oven.

The method may further include adding a fire extinguishing agent into the inner cavity between the steps of depositing the at least one hazardous material within the inner cavity of the aircraft oven. The fire extinguishing agent may be at least one of fire-extinguishing granules and/or an automatic fire extinguisher.

The method may further include closing a valve when switching from the normal operation mode to the safety operation mode. The valve may be electrically closed and/or mechanically closed.

The method may further include a warning signal provided when the aircraft oven is in the safety operation mode. Additionally, or alternatively, a status of the inner cavity may be displayed on the aircraft oven.

### BRIEF DESCRIPTION OF THE DRAWINGS

Figures 1A-1C show an example of an aircraft oven that includes a safety operation mode.
Figure 2 shows an example of a cross-section of an aircraft oven that includes a safety operation mode.
Figure 3 shows an example method of using any of the ovens shown in Figures 1A-2.

### DETAILED DESCRIPTION

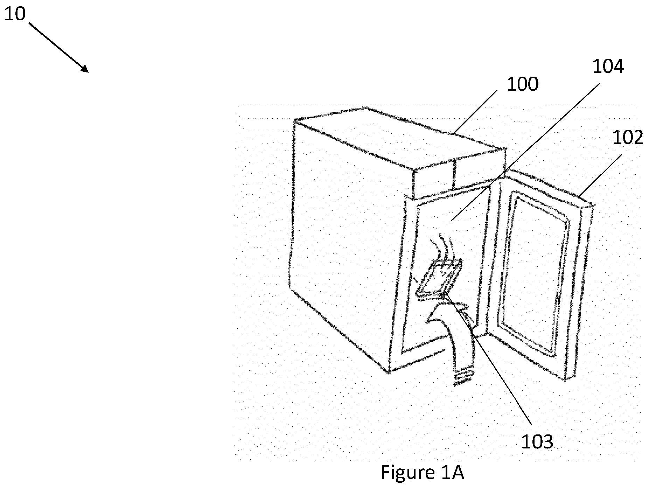

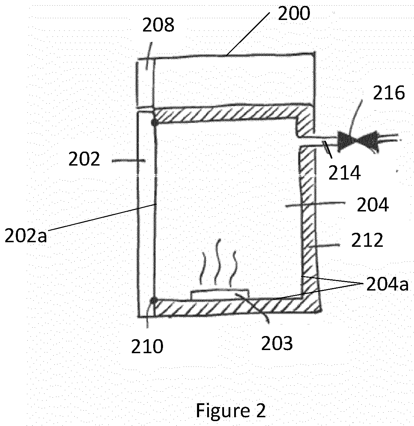

Figures 1A-1C and Figure 2 show representations of ovens in accordance with the detailed description below. It is clear that the elements of the ovens have been extrapolated that are relevant to the present disclosure and that the ovens would include ordinary elements that are not shown for the specifics of the present disclosure. Such elements that are not shown, but would ordinarily be included in the aircraft ovens, are: heating elements, fan, internal circuitry etc.

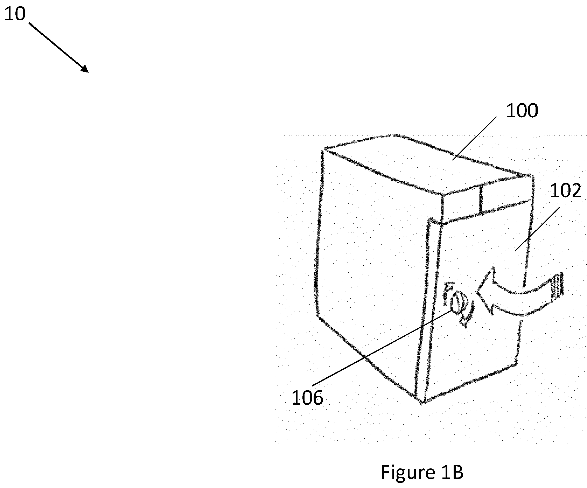

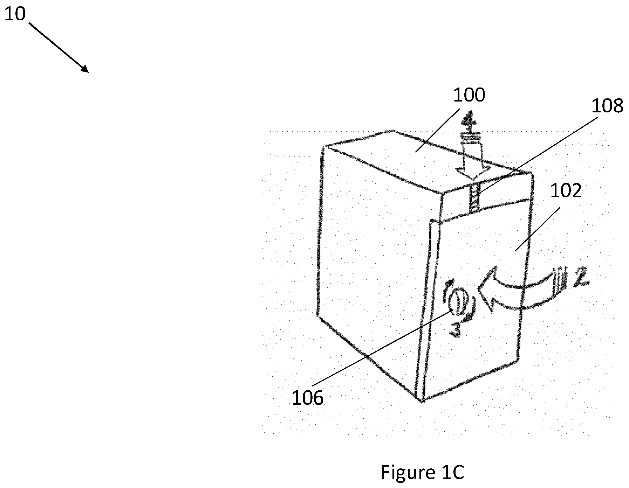

Figure 1A-1C show an example of an aircraft oven system, shown generally as 10. As can be seen in Figure 1A, an aircraft oven 10 includes an inner cavity 104 and a door 102. As shown in Figure 1A, the inner cavity 104 is configured to receive at least one hazardous item (e.g. an overheating portable device, laptop, burning item etc.) 103. In Figure 1B, it is shown that the aircraft oven door 102 may be closed and locked using a locking mechanism 106. Therefore, the at least one hazardous item 103 may be locked within the aircraft oven 100. As shown in Figure 1C, once the aircraft oven door 102 is closed and locked via the locking mechanism 106 there may be provided a user interface 108 to allow the user to switch from a normal operation mode (i.e. when the aircraft oven 100 is in its normal operation) to a "safe box" (or safety) operation mode (i.e., when the aircraft oven 100 includes at least one hazardous item 103 and cannot be used in its normal operation). The user interface 108 may be a Human Machine Interface or an actuator lever.

Figures 1A-1C show a general overview of the concept of using an aircraft oven for use as in a safety operation mode. An aircraft oven, such as the aircraft oven 100 shown in these Figures may, for example, withstand extremely high temperatures and contain spillage, small bursts and/or fire that avoids quick propagation or re-ignition. However, aircraft ovens are not generally completely closed (i.e. airtight) due to, for instance, a venting hose or valve connecting the inner cavity of the aircraft oven to the back of the galley compartment for pressure release/compensation. Therefore, in the examples of this disclosure, the safety operation mode is to ensure that the aircraft oven, e.g. the aircraft oven 100, is completely closed such that no fumes, smoke and/or fire can escape the oven. Further, no fresh air will be able to enter the aircraft oven 100 to fuel or reignite the fire.

Figure 2 shows an example of a cross-section of an aircraft oven 200 that can be used as an example in the aircraft oven system 10 of Figures 1A-1C. The aircraft oven 200 may include a door 202, an inner cavity 204, insulation 212, an airtight seal 210 located between the door 202 and the insulation 212 to ensure that the inner cavity 204 is airtight, a vent hose 214 and a control valve 216. The door 202 may include an inner door surface 202a and the inner cavity 204 may include an inner cavity surface 204a. The inner door surface 202a and the inner cavity surface 204a may contain a refractory or metallic material (e.g. ceramic, polycrystalline, stainless steel, titanium or the like) that is resistant to decomposition by heat, pressure, or chemical attack and that retains strength and form at high temperatures. In this case, the airtight seal 210 is located between the inner door surface 202a and the inner cavity surface 204a to ensure that the inner cavity 204 is airtight.

In normal operation, the vent hose 214 provides fluid flow of air from the inner cavity 204. This is to ensure that the aircraft oven 200 operates as a conventional oven for cooking/warming meals and the like. The control valve 216 may operate to maintain the normal operation of the aircraft oven 200 by being in an open position such that there is fluid flow through the vent hose 214 during operation. Optionally, in a pressurized normal mode, the control valve 216 is actuated to build pressure during cooking. As shown in Figure 2, the inner cavity 204 is configured to receive at least one hazardous item (e.g. an overheating portable device, laptop, burning item etc.) 203. When a hazardous item, e.g. 203, is located in the aircraft cabin (not shown) by the cabin crew, the at least one hazardous item 203 may be deposited into the inner cavity 204 of the aircraft oven 200. The oven door 202 may be closed and locked via a locking mechanism (not shown). When the oven door 202 is closed and locked, the airtight seal 210 ensures that the inner cavity 204 is airtight. As an example, the airtight seal 210 may be a temperature resistant seal. In the example shown in Figure 2, the aircraft oven includes a Human Machine Interface (HMI) 208 that allows the user (e.g. cabin crew) to switch the aircraft oven 200 from a normal operation mode to a safety operation mode. It is envisaged that the HMI 208, when engaged by a user to switch from a normal operation mode to a safety operation mode, would send an electrical signal to the control valve 216 to close the valve. In some examples, the control valve 216 is permanently closed. In other words, when the safety operation mode is activated, the safety operation mode closes the control valve 216 (either permanently or temporarily) to ensure that there is no fluid or gas flow through the vent hose 214. This allows for the aircraft oven 200 to act as a 'safe box' for suffocating the fire and containing the smoke from the at least one hazardous item 203 deposited within the inner cavity 204. Although an HMI 208 is shown in Figure 2, it is to be understood that, instead of the HMI 208, or in addition to, there may be provided a mechanical actuator (not shown) on the exterior of the aircraft oven 200 to switch the control valve 216 from an open position to a closed position, and vice versa, to move from a normal operation mode to a safety operation mode.

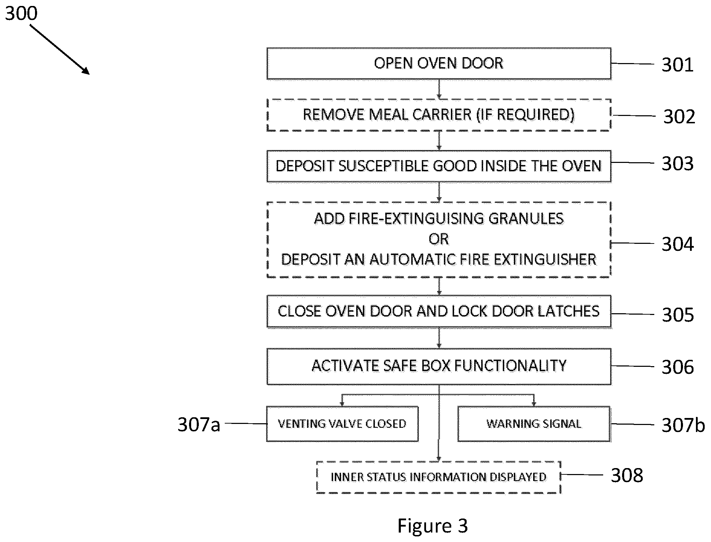

Figure 3 shows an example of a method 300 for operating any of the aircraft ovens described above (e.g., aircraft oven 100, 200). The steps shown in dotted lines in the method 300 are entirely optional. At step 301, the cabin crew, or user, can open the oven door (e.g., oven doors 102, 202). Optionally, the cabin crew, or user, can remove any meals, meal carriers, or the like from the inner cavity (e.g., inner cavity 104, 204) of the aircraft oven, if necessary. In step 303, the cabin crew, or user, deposits a good susceptible to produce heat, explode, leak, catch fire, release smoke or the like (e.g., at least one hazardous item 103, 203) inside the inner cavity of the aircraft oven. Optionally, a fire-extinguishing agent can be deposited into the inner cavity at step 304. The fire-extinguishing agent may be, as an example, fire-extinguishing granules or an automatic fire extinguisher. At step 305, the cabin crew, or user, closes the oven door and locks the oven door (e.g., via latches (not shown)). At step 306, the cabin crew, or user, activates the safe box functionality, for example by switching from a normal operation mode to a safety operation mode as described above in relation to Figure2. At step 307a, on successful activation of the safe box functionality, a venting valve (e.g., control valve 216) is closed. A warning signal is displayed on the aircraft oven at step 307b to notify the user that the aircraft oven is in a safety operation mode. The warning signal may be, for example, a visual and/or audible signal. Optionally, the status of the inner cavity of the aircraft oven may be displayed on the aircraft oven (e.g., on an HMI 208).

The aircraft ovens described above make use of already existing appliances on aircraft that saves space, weight, cost and maintenance due to them already being present in aircraft galleys. Further, due to the plurality of ovens and distribution of different galleys within an aircraft, the aircraft ovens are more accessible and convenient. The hazardous items may be any item that is considered a hazard and the aircraft ovens described herein not only contain/suffocate fire but also contain fumes, smoke, bursts, chemical/liquid spills and/or overheating goods. The hazardous item may, therefore, be any product susceptible to produce heat, explode, catch fire, release fumes and/or release smoke and is certainly not limited to portable electric devices. Due to the increased volume of inner cavities of aircraft ovens, many hazardous items may be stored inside to ensure the safety of the aircraft cabin. Generally, cabin crew are aware of the location of all aircraft ovens and have ample knowledge of how to operate ovens - therefore, little training is needed to ensure that the cabin crew understand how to operate the oven from a normal operation mode to a safety operation mode.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. An aircraft oven (100, 200) comprising:
an inner cavity (104, 204) configured to receive at least one hazardous item (103, 203), wherein the at least one hazardous item (103, 203) is susceptible to producing heat, exploding, catching fire and/or releasing smoke;
an oven door (102, 202);
wherein, when the oven door (102, 202) is closed, the aircraft oven is configured to switch from a normal operation mode to a safety operation mode, in use, and wherein the safety operation mode is the aircraft oven (100,200) being completely closed such that no fumes, smoke and/or fire escape the aircraft oven (100,200).

2. The aircraft oven of claim 1, wherein the aircraft oven further comprises:
a vent hose (214) and a valve (216); and
wherein, when the aircraft oven is in the safety operation mode, the control valve (216) is closed.

3. The aircraft oven of claim 2, wherein the valve (216) is permanently closed.

4. The aircraft oven of any preceding claim, further comprising:
a Human Machine Interface (108, 208) and/or a mechanical actuator;
wherein the Human Machine Interface and/or the mechanical actuator is configured to switch the aircraft oven from the normal operation mode to the safety operation mode, in use.

5. The aircraft oven of any preceding claim, further comprising:
insulation (212), an airtight seal (210), wherein the airtight seal (210) is located between the oven door (102, 202) and the insulation (212).

6. The aircraft oven of claim 5, wherein the oven door (102, 202) includes an inner door surface (202a) and wherein the inner cavity (204) includes an inner cavity surface (204a) and wherein the airtight seal (210) is located between the inner door surface (202a) and the inner cavity surface (204a).

7. The aircraft oven of claim 6, wherein the inner door surface (202a) and the inner cavity surface (204a) includes a refractory or metallic material.

8. An aircraft comprising the aircraft oven of any preceding claim.

9. A method for switching an aircraft oven from a normal operation mode to a safety operation mode, the method comprising:
opening an oven door;
depositing at least one hazardous item within an inner cavity of the aircraft oven, wherein the at least one hazardous item (103, 203) is susceptible to producing heat, exploding, catching fire and/or releasing smoke;
closing the oven door and locking the oven door;
activating a user interface to switch from a normal operation mode to a safety operation mode, wherein the safety operation mode is the aircraft oven (100,200) being completely closed such that no fumes, smoke and/or fire escape the aircraft oven (100,200).

10. The method of claim 9, further comprising removing at least one meal carrier from the aircraft oven between the steps of opening the door and depositing the at least one hazardous material within the inner cavity of the aircraft oven.

11. The method of claim 9 or 10, further comprising adding a fire extinguishing agent into the inner cavity between the steps of depositing the at least one hazardous material within the inner cavity of the aircraft oven; and
wherein the fire extinguishing agent is at least one of fire-extinguishing granules and/or an automatic fire extinguisher.

12. The method of any of claims 9-11, further comprising closing a valve when switching from the normal operation mode to the safety operation mode.

13. The method of claim 12, wherein the valve is electrically closed and/or mechanically closed.

14. The method of any of claims 9-13, wherein a warning signal is provided when the aircraft oven is in the safety operation mode.

15. The method of any of claims 9-14, wherein a status of the inner cavity is displayed on the aircraft oven.

## Patentansprüche

1. Luftfahrzeugofen (100, 200), umfassend:
einen Innenhohlraum (104, 204), der ausgelegt ist, um mindestens ein Gefahrgut (103, 203) aufzunehmen, wobei das mindestens eine Gefahrgut (103, 203) anfällig dafür ist, Wärme zu erzeugen, zu explodieren, Feuer zu fangen und/oder Rauch freizusetzen;
eine Ofentür (102, 202);
wobei, wenn die Ofentür (102, 202) geschlossen ist, der Luftfahrzeugofen ausgelegt ist, im Gebrauch von einem Normalbetriebsmodus zu einem Sicherheitsbetriebsmodus umzuschalten, und wobei der Sicherheitsbetriebsmodus der Luftfahrzeugofen (100, 200) ist, der vollständig geschlossen ist, so dass keine Rauchgase, Rauch und/oder Feuer dem Luftfahrzeugofen (100, 200) entweichen.

2. Luftfahrzeugofen nach Anspruch 1, wobei der Luftfahrzeugofen ferner umfasst:
einen Entlüftungsschlauch (214) und ein Ventil (216); und
wobei, wenn der Luftfahrzeugofen im Sicherheitsbetriebsmodus ist, das Steuerventil (216) geschlossen ist.

3. Luftfahrzeugofen nach Anspruch 2, wobei das Ventil (216) dauerhaft geschlossen ist.

4. Luftfahrzeugofen nach einem der vorhergehenden Ansprüche, ferner umfassend:
eine Mensch-Maschine-Schnittstelle (108, 208) und/oder einen mechanischen Aktuator;
wobei die Mensch-Maschine-Schnittstelle und/oder der mechanische Aktuator ausgelegt ist, im Gebrauch den Luftfahrzeugofen vom Normalbetriebsmodus zum Sicherheitsbetriebsmodus umzuschalten.

5. Luftfahrzeugofen nach einem der vorhergehenden Ansprüche, ferner umfassend:
eine Isolierung (212), eine luftdichte Dichtung (210), wobei die luftdichte Dichtung (210) sich zwischen der Ofentür (102, 202) und der Isolierung (212) befindet.

6. Luftfahrzeugofen nach Anspruch 5, wobei die Ofentür (102, 202) eine Innentüroberfläche (202a) beinhaltet und wobei der Innenhohlraum (204) eine Innenhohlraumoberfläche (204a) beinhaltet und wobei die luftdichte Dichtung (210) sich zwischen der Innentüroberfläche (202a) und der Innenhohlraumoberfläche (204a) befindet.

7. Luftfahrzeugofen nach Anspruch 6, wobei die Innentüroberfläche (202a) und die Innenhohlraumoberfläche (204a) ein feuerfestes oder metallisches Material beinhalten.

8. Luftfahrzeug, umfassend den Luftfahrzeugofen nach einem der vorhergehenden Ansprüche.

9. Verfahren zum Umschalten eines Luftfahrzeugofens von einem Normalbetriebsmodus zu einem Sicherheitsbetriebsmodus, wobei das Verfahren umfasst:
Öffnen einer Ofentür;
Einbringen mindestens eines Gefahrguts in einen Innenhohlraum des Luftfahrzeugofens, wobei das mindestens eine Gefahrgut (103, 203) anfällig dafür ist, Wärme zu erzeugen, zu explodieren, Feuer zu fangen und/oder Rauch freizusetzen;
Schließen der Ofentür und Verriegeln der Ofentür;
Aktivieren einer Benutzerschnittstelle, um von einem Normalbetriebsmodus zu einem Sicherheitsbetriebsmodus umzuschalten, wobei der Sicherheitsbetriebsmodus der Luftfahrzeugofen (100, 200) ist, der vollständig geschlossen ist, so dass keine Rauchgase, Rauch und/oder Feuer dem Luftfahrzeugofen (100, 200) entweichen.

10. Verfahren nach Anspruch 9, ferner umfassend das Entfernen mindestens eines Essensträgers aus dem Luftfahrzeugofen zwischen den Schritten des Öffnens der Tür und des Einbringens des mindestens einen Gefahrguts in den Innenhohlraum des Luftfahrzeugofens.

11. Verfahren nach Anspruch 9 oder 10, ferner umfassend das Hinzufügen eines Feuerlöschmittels in den Innenhohlraum zwischen den Schritten des Einbringens des mindestens einen Gefahrguts in den Innenhohlraum des Luftfahrzeugofens; und
wobei das Feuerlöschmittel mindestens eines von Feuerlöschgranulat und/oder einem automatischen Feuerlöscher ist.

12. Verfahren nach einem der Ansprüche 9 bis 11, ferner umfassend das Schließen eines Ventils beim Umschalten vom Normalbetriebsmodus zum Sicherheitsbetriebsmodus.

13. Verfahren nach Anspruch 12, wobei das Ventil elektrisch geschlossen und/oder mechanisch geschlossen wird.

14. Verfahren nach einem der Ansprüche 9 bis 13, wobei ein Warnsignal bereitgestellt wird, wenn der Luftfahrzeugofen im Sicherheitsbetriebsmodus ist.

15. Verfahren nach einem der Ansprüche 9 bis 14, wobei ein Status des Innenhohlraums auf dem Luftfahrzeugofen angezeigt wird.

## Revendications

1. Four pour aéronef (100, 200) comprenant :
une cavité interne (104, 204) conçue pour recevoir au moins un article dangereux (103, 203), dans lequel l'au moins un article dangereux (103, 203) est susceptible de produire de la chaleur, d'exploser, de prendre feu et/ou de dégager de la fumée ;
une porte de four (102, 202) ;
dans lequel, lorsque la porte de four (102, 202) est fermée, le four pour aéronef est conçu pour passer d'un mode de fonctionnement normal à un mode de fonctionnement en sécurité, en cours d'utilisation, et dans lequel le mode de fonctionnement en sécurité consiste à fermer complètement le four pour aéronef (100, 200) de sorte qu'aucune vapeur, aucune fumée et/ou aucun feu ne s'échappe(nt) du four pour aéronef (100, 200).

2. Four pour aéronef selon la revendication 1, dans lequel le four pour aéronef comprend en outre :
un tuyau de ventilation (214) et une vanne (216) ; et
dans lequel, lorsque le four pour aéronef est dans le mode de fonctionnement en sécurité, la vanne (216) de commande est fermée.

3. Four pour aéronef selon la revendication 2, dans lequel la vanne (216) est fermée en permanence.

4. Four pour aéronef selon l'une quelconque revendication précédente, comprenant en outre :
une Interface homme-machine (108, 208) et/ou un actionneur mécanique ;
dans lequel l'Interface homme-machine et/ou l'actionneur mécanique est(sont) conçu(s) pour faire passer le four pour aéronef du mode de fonctionnement normal au mode de fonctionnement en sécurité, en cours d'utilisation.

5. Four pour aéronef selon l'une quelconque revendication précédente, comprenant en outre :
une isolation (212), un joint hermétique (210), dans lequel le joint hermétique (210) est situé entre la porte de four (102, 202) et l'isolation (212).

6. Four pour aéronef selon la revendication 5, dans lequel la porte de four (102, 202) comporte une surface de porte interne (202a) et dans lequel la cavité interne (204) comporte une surface de cavité interne (204a) et dans lequel le joint étanche (210) est situé entre la surface de porte interne (202a) et la surface de cavité interne (204a).

7. Four pour aéronef selon la revendication 6, dans lequel la surface de porte interne (202a) et la surface de cavité interne (204a) comportent un matériau réfractaire ou métallique.

8. Aéronef comprenant le four pour aéronef selon l'une quelconque revendication précédente.

9. Procédé destiné à faire passer un four pour aéronef d'un mode de fonctionnement normal à un mode de fonctionnement en sécurité, le procédé comprenant :
l'ouverture de la porte de four ;
le dépôt d'au moins un article dangereux à l'intérieur d'une cavité interne du four pour aéronef, dans lequel l'au moins un article dangereux (103, 203) est susceptible de produire de la chaleur, d'exploser, de prendre feu et/ou de dégager de la fumée ;
la fermeture de la porte de four et le verrouillage de la porte de four ;
l'activation d'une interface utilisateur afin de passer d'un mode de fonctionnement normal à un mode de fonctionnement en sécurité, dans lequel le mode de fonctionnement en sécurité consiste à fermer complètement le four pour aéronef (100, 200) de sorte qu'aucune vapeur, aucune fumée et/ou aucun feu ne s'échappe(nt) du four pour aéronef (100, 200).

10. Procédé selon la revendication 9, comprenant en outre le retrait d'au moins un support pour repas à partir du four pour aéronef entre les étapes consistant à ouvrir la porte et à déposer l'au moins un matériau dangereux à l'intérieur de la cavité interne du four pour aéronef.

11. Procédé selon la revendication 9 ou 10, comprenant en outre l'ajout d'un agent extincteur dans la cavité interne entre les étapes consistant à déposer l'au moins un matériau dangereux à l'intérieur de la cavité interne du four pour aéronef ; et
dans lequel l'agent extincteur est au moins l'un parmi des granulés extincteurs et/ou un extincteur automatique.

12. Procédé selon l'une quelconque des revendications 9 à 11, comprenant en outre la fermeture d'une vanne lors du passage du mode de fonctionnement normal au mode de fonctionnement en sécurité.

13. Procédé selon la revendication 12, dans lequel la vanne est fermée électriquement et/ou mécaniquement.

14. Procédé selon l'une quelconque des revendications 9 à 13, dans lequel un signal d'avertissement est fourni lorsque le four pour aéronef est dans le mode de fonctionnement en sécurité.

15. Procédé selon l'une quelconque des revendications 9 à 14, dans lequel un état de la cavité interne est affiché sur le four pour aéronef.
